(19) Europäisches Patentamt
European Patent Office
Office européen des brevets

(11) **EP 4 775 932 A1**

(12) **EUROPEAN PATENT APPLICATION**
published in accordance with Art. 153(4) EPC

(43) Date of publication:
**15.07.2026 Bulletin 2026/29**

(21) Application number: **24862578.2**

(22) Date of filing: **21.08.2024**

(51) International Patent Classification (IPC):
*G01F 1/66* (2022.01)

(52) Cooperative Patent Classification (CPC):
**G01F 1/66**

(86) International application number:
**PCT/JP2024/029606**

(87) International publication number:
**WO 2025/052924 (13.03.2025 Gazette 2025/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **06.09.2023 JP 2023144231**

(71) Applicant: **PANASONIC INTELLECTUAL
PROPERTY
MANAGEMENT CO., LTD.
Kadoma-shi, Osaka 571-0057 (JP)**

(72) Inventors:
• **KAMON, Kenichi**
**Osaka 571-0057 (JP)**
• **KOBA, Yasuo**
**Osaka 571-0057 (JP)**

(74) Representative: **SSM Sandmair
Patentanwälte Rechtsanwalt
Partnerschaft mbB
Joseph-Wild-Straße 20
81829 München (DE)**

(54) **FLOW RATE MEASURING DEVICE**

(57) A flow rate measuring device includes: a zero cross specifying means for specifying a zero cross point at which the voltage of an amplified signal changes from a positive voltage to a negative voltage for the first time after the voltage of the amplified signal exceeds a reference voltage, the amplified signal being obtained by amplifying a received signal received by a first transducer or a second transducer; a timing means for measuring an elapsed time from the transmission of a drive signal to the zero cross point; a peak detecting means for detecting a plurality of peak voltages of the amplified signal; a reference determining means for determining, as a flow rate measurement reference voltage, a voltage between two adjacent peak voltages among the plurality of peak voltages; and a necessity determining means for determining based on the voltage of the amplified signal whether or not redetermining the flow rate measurement reference voltage by the reference determining means is necessary.

FIG. 1

EP 4 775 932 A1

## Description

## Technical Field

The present disclosure relates to a flow rate measuring device that measures the flow rate of a fluid, such as gas or water, using ultrasonic waves.

## Background Art

A flow rate measuring device has been known, which resets a reference voltage such that the reference voltage falls within a range between predetermined peak voltages of a received signal, when a difference between a time difference (a time from the start of the transmission of the ultrasonic wave to a zero cross point) measured by a time difference measuring means and a value stored in a time difference storing means is a predetermined value or more (see PTL 1). Thus, the calculation accuracy of a flow velocity and a flow rate by a calculating means is prevented from deteriorating.

## Citation List

## Patent Literature

PTL 1: Japanese Laid-Open Patent Application Publication No. 2014-006170

## Summary of Invention

## Technical Problem

In recent years, there are various types of gases as measurement targets, and the peak voltage may vary depending on the type of the gas. Therefore, in some cases, the reference voltage cannot be held in the range between the predetermined peak voltages of the received signal. Moreover, the reference voltage may be reset periodically. However, according to the above resetting method, the reference voltage may be reset even when the reference voltage is held in the range between the predetermined peak voltages, and this leads to an increase in current consumption due to such unnecessary processing.

An object of the present disclosure is to provide a flow rate measuring device that can suppress an increase in current consumption while avoiding the deterioration of calculation accuracy of a flow velocity and a flow rate of a fluid.

## Solution to Problem

A flow rate measuring device of the present disclosure includes: a first transducer and a second transducer that are located at a fluid pipe and transmit and receive an ultrasonic signal; a transmitting means for transmitting a drive signal to the first transducer or the second transducer; a switching means for switching a target that receives the drive signal, between the first transducer and the second transducer; an amplifying means for amplifying a received signal received by the first transducer or the second transducer and outputting an amplified signal; a zero cross specifying means for comparing a voltage of the amplified signal with a reference voltage and specifying a zero cross point at which the voltage of the amplified signal changes from a positive voltage to a negative voltage for the first time after the voltage of the amplified signal exceeds the reference voltage; a timing means for measuring an elapsed time from the transmission of the drive signal to the zero cross point; a peak detecting means for detecting a plurality of peak voltages of the amplified signal; a reference determining means for determining, as a flow rate measurement reference voltage, a voltage between two adjacent peak voltages among the plurality of peak voltages; a calculating means for calculating a flow velocity and a flow rate of a fluid flowing through the fluid pipe, based on the elapsed time when the flow rate measurement reference voltage is set as the reference voltage; and a necessity determining means for determining based on the voltage of the amplified signal whether or not redetermining the flow rate measurement reference voltage by the reference determining means is necessary.

According to the present disclosure, only when the necessity determining means determines based on the change in the voltage of the amplified signal of the received signal that redetermining the flow rate measurement reference voltage is necessary, the process of detecting the peak voltages and the process of redetermining the flow rate measurement reference voltage based on the peak voltages may be performed. Thus, it is possible to avoid the deterioration of the calculation accuracy (the calculation accuracy of the flow velocity and the flow rate of the fluid) which is caused when the flow rate measurement reference voltage set in the range between predetermined peak voltages falls outside the range between predetermined peak voltages due to the change in the peak voltage by the type of the gas. In addition, the number of times of the transmission of the ultrasonic signal can be reduced, and therefore, the increase in the current consumption can be suppressed.

In the above disclosure, a voltage lower than the flow rate measurement reference voltage between the two adjacent peak voltages may be set as a first voltage; a voltage higher than the flow rate measurement reference voltage between the two adjacent peak voltages may be set as a second voltage; the peak detecting means may change the reference voltage in predetermined steps between the first voltage and the second voltage; and when there is a voltage of the amplified signal at which the elapsed time obtained by the timing means in each of the predetermined steps changes at a predetermined change rate or more, the necessity determining means may determine that the redetermining is necessary.

According to the above configuration, the flow rate measurement reference voltage can be redetermined only when the peak voltage is detected between the first voltage and the second voltage. A case where the peak voltage is detected between the first voltage and the second voltage is a case where the voltage difference between the flow rate measurement reference voltage and the peak voltage is relatively small, and it is likely that the flow rate measurement reference voltage falls outside the range between the peak voltages. Thus, when it is unlikely that the flow rate measurement reference voltage falls outside the range between the peak voltages, and the peak voltage is not detected between the first voltage and the second voltage, redetermining the flow rate measurement reference voltage is unnecessary. Therefore, the number of times of the transmission of the ultrasonic signal can be reduced, and the deterioration of the calculation accuracy (the calculation accuracy of the flow velocity and the flow rate of the fluid) which is caused when the peak voltage is detected between the first voltage and the second voltage can be avoided.

In the above disclosure, a voltage between the two adjacent peak voltages may be set as a first voltage; a voltage higher than a higher one of the two adjacent peak voltages may be set as a second voltage; the peak detecting means may change the reference voltage in predetermined steps between the first voltage and the second voltage; and when there is no voltage of the amplified signal at which the elapsed time obtained by the timing means in each of the predetermined steps changes at a predetermined change rate or more, the necessity determining means may determine that the redetermining is necessary.

According to the above configuration, only when the peak voltage that was originally located between the first voltage and the second voltage is no longer detected between the first voltage and the second voltage, i.e., only when the waveform of the amplified signal changes, the flow rate measurement reference voltage can be redetermined. Thus, when the waveform of the amplified signal does not change, redetermining the flow rate measurement reference voltage is unnecessary. Therefore, the number of times of the transmission of the ultrasonic signal can be reduced, and the deterioration of the calculation accuracy (the calculation accuracy of the flow velocity and the flow rate of the fluid) which is caused when the waveform of the amplified signal changes can be avoided.

In the above disclosure, immediately after the flow rate measurement reference voltage is redetermined by the reference determining means, the necessity determining means may further determine whether or not redetermining the flow rate measurement reference voltage is necessary.

The type of the gas may change instantaneously, and the waveform of the amplified signal may change. According to the above configuration, it is possible to avoid a case where when the change in the type of the gas occurs during the detection of the peak voltage, the flow rate measurement reference voltage is determined based on the amplified signal in the middle of this change. Therefore, the flow rate measurement reference voltage can be redetermined based on the received signal after the type of the gas changes.

In the above disclosure, immediately after the flow rate measuring device is turned on, the necessity determining means may determine whether or not redetermining the flow rate measurement reference voltage is necessary.

According to the above configuration, when the flow rate measuring device is in an off state, and the flow rate measurement reference voltage falls outside the range between the predetermined peak voltages or is a value that is not at an intermediate point between the peak voltages but is close to the peak voltage, the necessity determining means can determine that redetermining the flow rate measurement reference voltage is necessary. Thus, the flow rate measurement reference voltage can be redetermined based on the result of the determination.

In the above disclosure, when the necessity determining means determines that the redetermining is necessary, the reference determining means may redetermine the flow rate measurement reference voltage a plurality of times at predetermined time intervals and may repeatedly redetermine the flow rate measurement reference voltage until a variation among the flow rate measurement reference voltages redetermined falls within a threshold.

According to the above configuration, when the waveform of the received signal changes instantaneously, it can be determined that redetermining the flow rate measurement reference voltage is necessary. Then, by repeatedly redetermining the flow rate measurement reference voltage until the variation among the flow rate measurement reference voltages falls within a threshold, determining the flow rate measurement reference voltage while the waveform of the received signal is changing can be avoided.

In the above disclosure, the peak detecting means may change the first voltage and the second voltage based on the detected peak voltages.

The interval between the peak voltages may be narrow depending on the type of the gas. In some cases, the voltage difference between the first voltage and the second voltage may be larger than the interval between the peak voltages. According to the above configuration, the execution of the step of determining by the necessity determining means that redetermining the flow rate measurement reference voltage is necessary and the execution of the step of redetermining the flow rate measurement reference voltage by the reference determining means based on the result of the determination can be avoided.

**Advantageous Effects of Invention**

The present disclosure can provide the flow rate measuring device that can suppress the increase in the current consumption while avoiding the deterioration of the calculation accuracy of the flow velocity and the flow rate of the fluid.

**Brief Description of Drawings**

FIG. 1 is a block diagram showing the configuration of a flow rate measuring device according to one embodiment.
FIG. 2 is a diagram for explaining an elapsed time from the transmission of a burst wave to a zero cross point.
FIG. 3A is an explanatory diagram showing one example in which redetermining a flow rate measurement reference voltage is unnecessary. FIG. 3B is an explanatory diagram showing one example in which redetermining the flow rate measurement reference voltage is necessary.
FIG. 4A is an explanatory diagram showing another example in which redetermining the flow rate measurement reference voltage is unnecessary. FIG. 4B is an explanatory diagram showing another example in which redetermining the flow rate measurement reference voltage is necessary.
FIG. 5 is a flowchart showing the flow of a process performed by the flow rate measuring device.
FIG. 6 is an explanatory diagram showing another example regarding a method of detecting peak voltages.

**Description of Embodiments**

Hereinafter, an embodiment of the present disclosure will be described in detail with reference to the drawings. However, excessively detailed descriptions may be omitted. For example, detailed explanations of matters that are already well known, and repeated explanations of configurations that are substantially the same, may be omitted. It should be noted that the accompanying drawings and the following description are provided to enable those skilled in the art to fully understand the present disclosure, and are not intended to limit the subject matter recited in the claims.

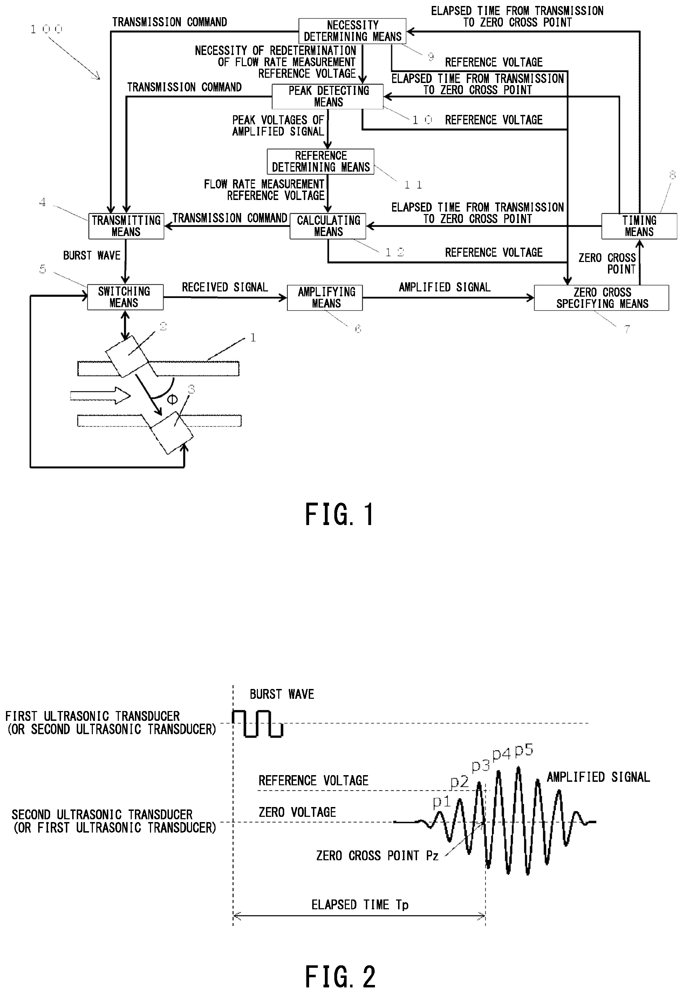

As shown in FIG. 1, a flow rate measuring device 100 includes a fluid pipe 1, a first ultrasonic transducer 2, a second ultrasonic transducer 3, a transmitting means 4, a switching means 5, an amplifying means 6, a zero cross specifying means 7, a timing means 8, a necessity determining means 9, a peak detecting means 10, a reference determining means 11, and a calculating means 12. In the present embodiment, the first ultrasonic transducer 2 corresponds to a first transducer, and the second ultrasonic transducer 3 corresponds to a second transducer.

The flow rate measuring device 100 includes a CPU, a storage (such as a ROM, a RAM, an EEPROM, and a HDD). A CPU 20 executes a predetermined program, stored in the storage, to functionally realize the transmitting means 4, the switching means 5, the amplifying means 6, the zero cross specifying means 7, the timing means 8, the necessity determining means 9, the peak detecting means 10, the reference determining means 11, and the calculating means 12. The CPU may be implemented as a single processor or may be implemented as a plurality of processors that cooperate with each other.

The fluid pipe 1 extends in a predetermined direction. A fluid flows through the fluid pipe 1. Examples of the fluid flowing through the fluid pipe 1 include gas and water.

The first ultrasonic transducer 2 is located at the fluid pipe 1 such that an ultrasonic wave transmission/-reception surface of the first ultrasonic transducer 2 is exposed inside the fluid pipe 1. The second ultrasonic transducer 3 is located at the fluid pipe 1 such that an ultrasonic wave transmission/reception surface of the second ultrasonic transducer 3 is exposed inside the fluid pipe 1 and is opposed to the ultrasonic wave transmission/reception surface of the first ultrasonic transducer 2 in a direction of a propagation path of an ultrasonic wave. The first ultrasonic transducer 2 and the second ultrasonic transducer 3 transmit and receive the ultrasonic waves. To be specific, the ultrasonic wave transmitted from the first ultrasonic transducer 2 is received by the second ultrasonic transducer 3. Moreover, the ultrasonic wave transmitted from the second ultrasonic transducer 3 is received by the first ultrasonic transducer 2.

The transmitting means 4 drives the first ultrasonic transducer 2 and the second ultrasonic transducer 3 through the switching means 5. The transmitting means 4 applies, for example, a burst wave as a drive signal to the first ultrasonic transducer 2 and the second ultrasonic transducer 3 through the switching means 5.

The switching means 5 switches a target that receives the drive signal from the transmitting means 4, between the first ultrasonic transducer 2 and the second ultrasonic transducer 3. When the target that receives the drive signal from the transmitting means 4 is switched to the first ultrasonic transducer 2 by the switching means 5, the first ultrasonic transducer 2 transmits the ultrasonic wave, and the second ultrasonic transducer 3 receives the ultrasonic wave. In contrast, when the target that receives the drive signal from the transmitting means 4 is switched to the second ultrasonic transducer 3 by the switching means 5, the second ultrasonic transducer 3 transmits the ultrasonic wave, and the first ultrasonic transducer 2 receives the ultrasonic wave.

The amplifying means 6 outputs an amplified signal obtained by amplifying a signal to a predetermined amplitude, the signal being received by a reception ultrasonic transducer that is one of the first ultrasonic transducer 2 and the second ultrasonic transducer 3 and having passed through the switching means 5.

The zero cross specifying means 7 compares the voltage of the amplified signal with a reference voltage. As shown in FIG. 2, the zero cross specifying means 7 specifies a zero cross point Pz at which the voltage of the amplified signal changes from a positive voltage to a negative voltage for the first time after the voltage of the amplified signal exceeds the reference voltage. The zero cross point Pz indicates a time point at which the ultrasonic wave transmitted from the transmission ultrasonic transducer is received by the reception ultrasonic transducer.

The timing means 8 measures an elapsed time Tp from the transmission of the drive signal by the transmitting means 4 to the zero cross point Pz. To be specific, the elapsed time Tp is a time from a time point at which the ultrasonic wave is transmitted from the transmission ultrasonic transducer to a time point at which the ultrasonic wave is received by the reception ultrasonic transducer. The elapsed time Tp corresponds to a propagation time of the ultrasonic wave.

The necessity determining means 9 determines based on the voltage of the amplified signal detected periodically whether or not redetermining a below-described flow rate measurement reference voltage Vref by the reference determining means 11 is necessary. It should be noted that details of the process performed by the necessity determining means 9 will be described later.

While changing the reference voltage in predetermined steps from a predetermined start voltage to a predetermined end voltage, the peak detecting means 10 transmits the drive signal for each predetermined step. Then, the peak detecting means 10 detects, as the peak voltages of the amplified signal, a plurality of reference voltages at each of which the obtained elapsed time Tp changes sharply (for example, changes at a predetermined change rate or more). Specifically, as shown in FIG. 2, the peak detecting means 10 detects peak voltages p1, p2, p3, p4, and p5 of the amplified signal. In the present embodiment, the start voltage corresponds to a first voltage, and the end voltage corresponds to a second voltage.

In the present embodiment, for example, the predetermined start voltage may be a voltage lower than the flow rate measurement reference voltage Vref, and the predetermined end voltage may be a voltage higher than the flow rate measurement reference voltage Vref. Or, the predetermined start voltage may be a voltage lower than any one of the plurality of peak voltages p1, p2, p3, p4, and p5 detected by the peak detecting means 10, and the predetermined end voltage may be a voltage higher than the same peak voltage. Moreover, each of the above predetermined steps may be one control unit (2 mV, for example) in a variation range of the reference voltage.

Moreover, the peak detecting means 10 may change the start voltage and the end voltage based on the detected peak voltages. In this case, the execution of the step of determining by the necessity determining means 9 that redetermining the flow rate measurement reference voltage Vref is necessary and the execution of the step of redetermining the flow rate measurement reference voltage Vref by the reference determining means 11 based on the result of the above determination can be avoided as much as possible.

The reference determining means 11 determines the flow rate measurement reference voltage Vref based on the peak voltages p1, p2, p3, p4, and p5 detected by the peak detecting means 10. Specifically, the reference determining means 11 may determine, as the flow rate measurement reference voltage Vref, a voltage between two adjacent peak voltages among the plurality of peak voltages p1, p2, p3, p4, and p5. The flow rate measurement reference voltage Vref is a voltage for determining the zero cross point Pz (in other words, a voltage for measuring the elapsed time Tp). Moreover, the flow rate measurement reference voltage Vref is a voltage when the calculating means 12 calculates the flow velocity and the flow rate of the fluid. Furthermore, the flow rate measurement reference voltage Vref is a voltage at, for example, an intermediate position between the peak voltages p2 and p3 as a position between predetermined peak voltages. This is because: the difference between the peak voltages p2 and p3 is the largest; and by setting the flow rate measurement reference voltage Vref between these peak voltages, the deterioration of the calculation accuracy (the calculation accuracy of the flow velocity and the flow rate of the fluid) can be avoided, the deterioration being caused when the flow rate measurement reference voltage Vref falls outside the range between the predetermined peak voltages due to changes in the peak voltages by the type of the gas. In the present embodiment, the flow rate measurement reference voltage is set in the range between the peak voltages p2 and p3. However, the present embodiment is not limited to this. The range between the peak voltages in which the flow rate measurement reference voltage is set may be suitably changed in accordance with the characteristics of the first ultrasonic transducer 2 and the second ultrasonic transducer 3.

Moreover, when the necessity determining means 9 determines that redetermining the flow rate measurement reference voltage Vref is necessary, the reference determining means 11 may redetermine the flow rate measurement reference voltage Vref a plurality of times at predetermined time intervals and may repeatedly redetermine the flow rate measurement reference voltage Vref until a variation among the flow rate measurement reference voltages Vref redetermined falls within a threshold. In this case, by repeatedly redetermining the flow rate measurement reference voltage Vref until the variation among the flow rate measurement reference voltages Vref falls within the threshold, determining the flow rate measurement reference voltage Vref while the waveform of the amplified signal is changing can be avoided. After the reference determining means 11 repeatedly redetermines the flow rate measurement reference voltage Vref, for example, the reference determining means 11 may determine the last flow rate measurement reference voltage as the flow rate measurement reference voltage Vref or may determine an average value of a plurality of flow rate measurement reference voltages as the flow rate measurement reference voltage Vref.

Based on the elapsed time Tp when the flow rate measurement reference voltage Vref is set as the reference voltage, the calculating means 12 calculates the flow velocity and the flow rate of the fluid flowing through the fluid pipe 1. In this case, an ultrasonic signal transmitted from the first ultrasonic transducer 2 based on the drive signal from the transmitting means 4 propagates through the flow of the fluid and is received by the second ultrasonic transducer 3, and the received signal is amplified by the amplifying means 6. Then, the zero cross specifying means 7 compares the voltage of the amplified signal with the reference voltage and specifies the zero cross point Pz, and the timing means 8 measures the elapsed time Tp from the transmission of the drive signal to the zero cross point Pz. As above, the process from the transmission of the burst wave by the transmitting means 4 to the calculation of the elapsed time Tp by the timing means 8 (hereinafter referred to as an "elapsed time calculation process") is executed a predetermined number of times n. To be specific, the elapsed time calculation process is executed once or a plurality of times. Moreover, a time measuring means (not shown) measures a time required to execute the above elapsed time calculation process n times (hereinafter referred to as a "total processing time").

The switching means 5 switches the ultrasonic wave transmission side and the ultrasonic wave reception side between the first ultrasonic transducer 2 and the second ultrasonic transducer 3. In each of a first aspect in which the first ultrasonic transducer 2 is the transmission side and a second aspect in which the second ultrasonic transducer 3 is the transmission side, the above elapsed time calculation process is executed n times. Based on the elapsed time Tp (i.e., the propagation time) in each of the above aspects, the calculating means 12 calculates the flow velocity and also calculates a flow rate Q from Formula 1 below. In Formula 1, L denotes an effective distance between the ultrasonic transducers in a flow direction, t1 denotes a time required to execute the above process n times in the first aspect (the total processing time measured by the above time measuring means; the total of the elapsed times Tp corresponding to n times), and t2 denotes a time required to execute the above process n times in the second aspect (the same time as above). Moreover, in Formula 1, v denotes the flow velocity of the fluid, S denotes a sectional area of the fluid pipe 1, and Φ (see FIG. 1) denotes an angle formed between the propagation path of the ultrasonic wave between the ultrasonic transducers and the flow direction of the fluid. It should be noted that t1 and t2 described above denote the times set on the assumption that in both the first aspect and the second aspect, the flow rate measurement reference voltage is between the same peaks (in the present embodiment, between the peak voltages p2 and p3). For example, if the flow rate measurement reference voltage is set between the peak voltages p2 and p3 in the first aspect, and the flow rate measurement reference voltage is set between the peak voltages p3 and p4 in the second aspect, the time t2 becomes different from an actual time intended to be measured, and as a result, the calculation accuracy of the flow velocity of the fluid and the calculation accuracy of the flow rate obtained based on the flow velocity deteriorate.

## Formula 1

$$Q = S \cdot v = S \cdot L/2 \cdot \cos\Phi((n/t1) - (n/t2))$$

Next, the process of determining by the necessity determining means 9 whether or not redetermining the flow rate measurement reference voltage Vref is necessary will be described in detail.

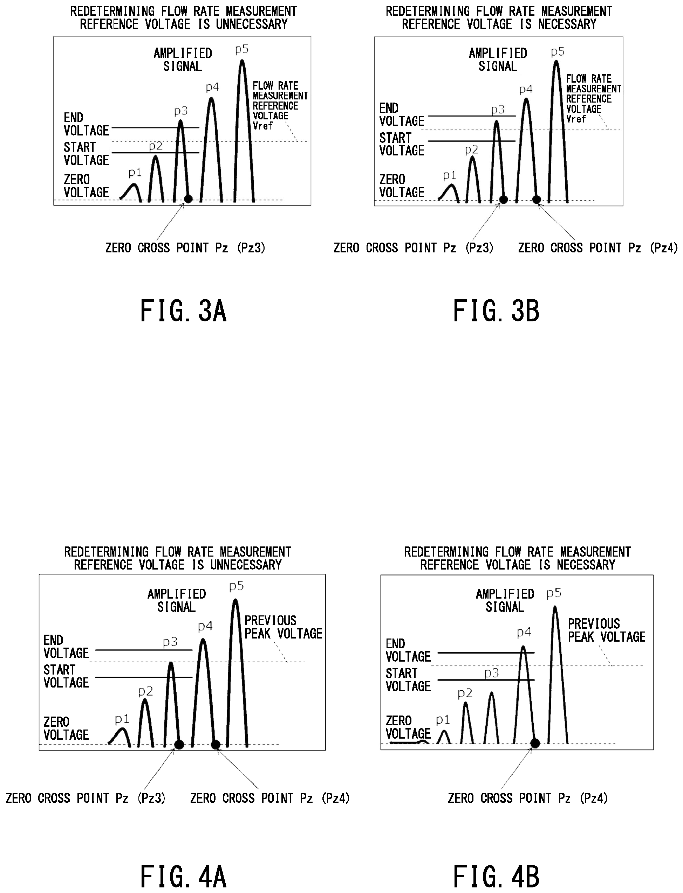

First, as shown in FIG. 3A, when a voltage lower than the flow rate measurement reference voltage Vref (i.e., the current flow rate measurement reference voltage Vref) is set as the start voltage, and a voltage higher than the flow rate measurement reference voltage Vref is set as the end voltage, the peak detecting means 10 increases the reference voltage in predetermined steps between the start voltage and the end voltage in each elapsed time calculation process. In accordance with this, the zero cross specifying means 7 specifies the zero cross point Pz in predetermined steps in each elapsed time calculation process. Moreover, the timing means 8 measures the elapsed time Tp in predetermined steps in each elapsed time calculation process. At this time, when there is the voltage of the amplified signal at which the elapsed time Tp obtained by the timing means 8 changes sharply (changes at the predetermined change rate or more), the necessity determining means 9 determines that redetermining the flow rate measurement reference voltage Vref is necessary.

Specifically, in FIG. 3A, the zero cross point Pz obtained by the zero cross specifying means 7 when the reference voltage is the above start voltage is a zero cross point Pz3 of a third wave (wave corresponding to the peak voltage p3) of the amplified signal. Moreover, the zero cross point Pz obtained by the zero cross specifying means 7 when the reference voltage is the above end voltage is also the zero cross point Pz3. Therefore, in FIG. 3A, the elapsed time Tp obtained when the reference voltage is the above start voltage and the elapsed time Tp obtained when the reference voltage is the above end voltage are the same as each other. Thus, when there is no voltage of the amplified signal at which the elapsed time Tp changes sharply, the necessity determining means 9 determines that redetermining the flow rate measurement reference voltage Vref is unnecessary.

Moreover, in FIG. 3B, the zero cross point Pz obtained by the zero cross specifying means 7 when the reference voltage is the above start voltage is the zero cross point Pz3. On the other hand, the zero cross point Pz obtained by the zero cross specifying means 7 when the reference voltage is the above end voltage is a zero cross point Pz4 of a fourth wave (wave corresponding to the peak voltage p4) of the amplified signal. Therefore, in FIG. 3B, the elapsed time Tp obtained when the reference voltage is the above start voltage and the elapsed time Tp obtained when the reference voltage is the above end voltage are different from each other. Thus, when there is the voltage of the amplified signal at which the elapsed time Tp changes sharply, the necessity determining means 9 determines that redetermining the flow rate measurement reference voltage Vref is necessary. As above, regarding the aspects shown in FIGS. 3A and 3B, determining that redetermining the flow rate measurement reference voltage Vref is necessary can be realized only when there is the voltage of the amplified signal at which the elapsed time Tp changes sharply.

Or, based on the presence or absence of the change in the peak voltage of the amplified signal as described below, the necessity determining means 9 may determine whether or not redetermining the flow rate measurement reference voltage Vref is necessary.

As shown in FIG. 4A, a voltage between the two adjacent peak voltages p2 and p3 detected in the past is the start voltage, and the zero cross point Pz obtained by the zero cross specifying means 7 when the reference voltage is the start voltage is the zero cross point Pz3. On the other hand, a voltage higher than a higher one of the two adjacent peak voltages p2 and p3 is the end voltage, and the zero cross point Pz obtained by the zero cross specifying means 7 when the reference voltage is the end voltage is the zero cross point Pz4 of the fourth wave (wave corresponding to the peak voltage p4) of the amplified signal. Thus, in FIG. 4A, the elapsed time Tp obtained when the reference voltage is the above start voltage and the elapsed time Tp obtained when the reference voltage is the above end voltage are different from each other. Therefore, when the peak voltage of the amplified signal does not change, i.e., when there is the voltage of the amplified signal at which the elapsed time Tp changes sharply, the necessity determining means 9 determines that redetermining the flow rate measurement reference voltage Vref is unnecessary. It should be noted that the above start voltage does not have to be the voltage between the two adjacent peak voltages p2 and p3 and may be, for example, the voltage between the two adjacent peak voltages p3 and p4. Even in this case, in order to prevent the determination accuracy from deteriorating, it is desirable that the peak voltage p1 that is significantly lower in value than the other peak voltages and the peak voltage p2 adjacent to the peak voltage p1 be not set as the above two adjacent peak voltages.

Moreover, in FIG. 4B, the zero cross point Pz obtained by the zero cross specifying means 7 when the reference voltage is the above start voltage is the zero cross point Pz4 of the fourth wave (wave corresponding to the peak voltage p4) of the amplified signal. Furthermore, the zero cross point Pz obtained by the zero cross specifying means 7 when the reference voltage is the above end voltage is also the zero cross point Pz4. Therefore, in FIG. 4B, the elapsed time Tp obtained when the reference voltage is the above start voltage and the elapsed time Tp obtained when the reference voltage is the above end voltage are the same as each other. Thus, when the peak voltage of the amplified signal changes, i.e., when there is no voltage of the amplified signal at which the elapsed time Tp changes sharply, the necessity determining means 9 determines that redetermining the flow rate measurement reference voltage Vref is necessary. As above, regarding the aspects shown in FIGS. 4A and 4B, determining that redetermining the flow rate measurement reference voltage Vref is necessary can be realized only when there is no voltage of the amplified signal at which the elapsed time Tp changes sharply.

Immediately after the flow rate measurement reference voltage Vref is redetermined by the reference determining means 11, the necessity determining means 9 may further determine whether or not redetermining the flow rate measurement reference voltage Vref is necessary. In this case, it is possible to avoid a case where when the change in the type of the gas occurs during the detection of the peak voltage, the flow rate measurement reference voltage Vref is determined based on the amplified signal in the middle of this change. One example in which whether or not redetermining the flow rate measurement reference voltage Vref is necessary is determined immediately after the redetermining is that: determining whether or not the redetermining is necessary is executed at predetermined intervals; and even when it is determined that the redetermining is necessary, and the flow rate measurement reference voltage Vref is redetermined, determining whether or not the redetermining is necessary is executed at the same intervals without changing the intervals.

Moreover, immediately after the flow rate measuring device 100 is turned on, the necessity determining means 9 may determine whether or not redetermining the flow rate measurement reference voltage Vref is necessary. In this case, when the flow rate measuring device 100 is in the off state, and the flow rate measurement reference voltage Vref falls outside the range between the predetermined peak voltages or is a value that is not at the intermediate point between the peak voltages but is close to the peak voltage, the necessity determining means 9 can determine that redetermining the flow rate measurement reference voltage Vref is necessary. One example in which whether or not redetermining the flow rate measurement reference voltage Vref is necessary is determined immediately after the flow rate measuring device 100 is turned on is that after the flow rate measuring device 100 is switched from the off state to the on state, whether or not the redetermining is necessary is determined prior to the measurement of the flow rate by the calculating means 12.

Next, the flow of the process performed by the flow rate measuring device 100 will be described with reference to the flowchart.

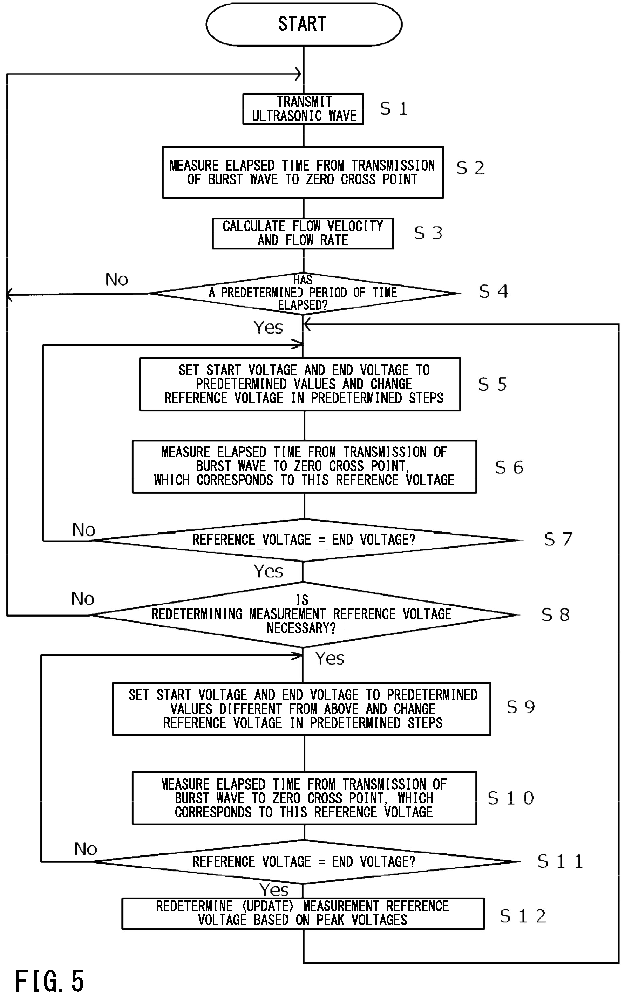

As shown in FIG. 5, first, one of the first ultrasonic transducer 2 and the second ultrasonic transducer 3 transmits the ultrasonic wave to the other based on the burst wave transmitted from the transmitting means 4 (Step S1).

Next, the timing means 8 measures the elapsed time Tp from the transmission of the burst wave to the zero cross point Pz specified by the zero cross specifying means 7 when the flow rate measurement reference voltage Vref is the reference voltage (Step S2). The calculating means 12 calculates the flow velocity and the flow rate of the fluid based on the elapsed time Tp (Step S3).

Next, the peak detecting means 10 determines whether or not a predetermined period of time has elapsed (Step S4). When the predetermined period of time has not yet elapsed (No in Step S4), the process returns to Step S1 and repeats Step S1 and the subsequent steps. On the other hand, when the predetermined period of time has elapsed (Yes in Step S4), the peak detecting means 10 sets the start voltage of the reference voltage to a voltage lower than the current flow rate measurement reference voltage Vref by a predetermined value, sets the end voltage of the reference voltage to a voltage higher than the current flow rate measurement reference voltage Vref by a predetermined value, and changes the reference voltage in predetermined steps (Step S5).

The timing means 8 measures the elapsed time Tp (the elapsed time Tp corresponding to the current reference voltage) from the transmission of the burst wave to the zero cross point Pz specified by the zero cross specifying means 7 (Step S6).

Next, the peak detecting means 10 determines whether or not the elapsed time calculation process in which the reference voltage is the above end voltage has been completed (Step S7). When the elapsed time calculation process in which the reference voltage is the above end voltage has not been completed yet (No in Step S7), the peak detecting means 10 returns to Step S5 and repeats Step S5 and the subsequent steps. On the other hand, when the elapsed time calculation process in which the reference voltage is the above end voltage has been completed (Yes in Step S7), the necessity determining means 9 determines based on the above-described method whether or not redetermining the flow rate measurement reference voltage Vref is necessary (Step S8).

When the necessity determining means 9 determines that redetermining the flow rate measurement reference voltage Vref is unnecessary (No in Step S8), the process returns to Step S1 and repeats Step S1 and the subsequent steps. On the other hand, when the necessity determining means 9 determines that redetermining the flow rate measurement reference voltage Vref is necessary (Yes in Step S8), the peak detecting means 10 sets the start voltage of the reference voltage to a minimum voltage (for example, a zero voltage) in a set range of the reference voltage, sets the end voltage of the reference voltage to a maximum voltage (for example, a voltage corresponding to a maximum amplitude of the amplified signal) in the set range of the reference voltage, and changes the reference voltage in predetermined steps (Step S9).

The timing means 8 measures the elapsed time Tp (the elapsed time Tp corresponding to the current reference voltage) from the transmission of the burst wave to the zero cross point Pz specified by the zero cross specifying means 7 (Step S10).

Next, the peak detecting means 10 determines whether or not the elapsed time calculation process in which the reference voltage is the above end voltage has been completed (Step S11). When the elapsed time calculation process in which the reference voltage is the above end voltage has not been completed yet (No in Step S11), the peak detecting means 10 returns to Step S9 and repeats Step S9 and the subsequent steps. On the other hand, when the elapsed time calculation process in which the reference voltage is the above end voltage has been completed (Yes in Step S11), the reference determining means 11 updates the flow rate measurement reference voltage Vref based on a plurality of peak voltages detected by the peak detecting means 10 (Step S12). Then, the process returns to Step S5 and repeats Step S5 and the subsequent steps.

As above, according to the flow rate measuring device 100 of the present embodiment, only when the necessity determining means 9 determines based on the change in the voltage of the amplified signal of the received signal that redetermining the flow rate measurement reference voltage Vref is necessary, the process of detecting the peak voltages and the process of redetermining the flow rate measurement reference voltage Vref based on the peak voltages may be performed. Thus, it is possible to avoid the deterioration of the calculation accuracy (the calculation accuracy of the flow velocity and the flow rate of the fluid) which is caused when the flow rate measurement reference voltage Vref set in the range between the predetermined peak voltages falls outside the range between the predetermined peak voltages due to the change in the peak voltage by the type of the gas. In addition, the number of times of the transmission of the ultrasonic signal can be reduced, and therefore, the increase in the current consumption can be suppressed.

It should be noted that since the above-described embodiment is provided to illustrate the technology of the present disclosure, various modifications, substitutions, additions, and omissions may be made within the scope of the claims or their equivalents. Examples are as follows.

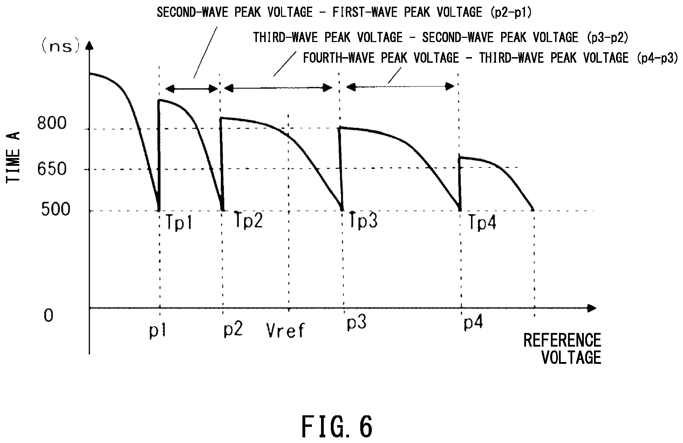

In the above embodiment, the reference voltage at which the elapsed time Tp changes sharply is detected as the peak voltage of the amplified signal. However, the method of detecting the peak voltage is not limited to this. As shown in FIG. 6, regarding a relationship between the reference voltage and a time A (i.e., a time from a time point at which a magnitude relationship between the voltage of the amplified signal and the reference voltage is reversed to the zero cross point Pz), the reference voltages corresponding to inflections Tp1, Tp2, Tp3, and Tp4 that are points where the time A increases sharply may be detected as the peak voltages of the amplified signal. Even in this case, on the basis that the difference (p3-p2) between the peak voltage p3 of the third wave and the peak voltage p2 of the second wave is the largest, the flow rate measurement reference voltage Vref can be set between these peak voltages. Thus, as with the above embodiment, it is possible to avoid the deterioration of the calculation accuracy which is caused when the flow rate measurement reference voltage Vref falls outside the range between the peak voltages due to the change in the peak voltage by the type of the gas.

Moreover, in the above embodiment, the flow rate measurement reference voltage Vref is set between the peak voltage p3 of the third wave of the amplified signal and the peak voltage p2 of the second wave of the amplified signal. However, the above embodiment is not limited to this. The flow rate measurement reference voltage Vref may be set between the peak voltage p4 of the fourth wave and the peak voltage p3 of the third wave. Although the difference (p4-p3) between the peak voltage p4 of the fourth wave and the peak voltage p3 of the third wave is smaller than the difference (p3-p2) between the peak voltage p3 of the third wave and the peak voltage p2 of the second wave, the slope of the change in the voltage at the zero cross point Pz becomes relatively steep, and therefore, the zero cross point Pz is easily specified. Thus, the accuracy of measuring the elapsed time Tp improves, and therefore, the calculation accuracy of the flow velocity and the flow rate improves.

Moreover, in the above embodiment, the start voltage is the first voltage, and the end voltage is the second voltage. However, the above embodiment is not limited to this. The start voltage may be the second voltage, and the end voltage may be the first voltage.

Furthermore, in the above embodiment, the burst wave is adopted as the drive signal transmitted from the transmitting means 4. However, the above embodiment is not limited to this. Another drive signal may be omitted.

**Reference Signs List**

| | |
|---|---|
| 1 | fluid pipe |
| 2 | first ultrasonic transducer |
| 3 | second ultrasonic transducer |
| 4 | transmitting means |
| 5 | switching means |
| 6 | amplifying means |
| 7 | zero cross specifying means |
| 8 | timing means |
| 9 | necessity determining means |
| 10 | peak detecting means |
| 11 | reference determining means |
| 12 | calculating means |
| 100 | flow rate measuring device |
| Pz | zero cross point |
| p1, p2, p3, p4, p5 | peak voltage |
| Tp | elapsed time |
| Vref | flow rate measurement reference voltage |

**Claims**

1.  A flow rate measuring device comprising:

    a first transducer and a second transducer that are located at a fluid pipe and transmit and receive an ultrasonic signal;
    a transmitting means for transmitting a drive signal to the first transducer or the second transducer;
    a switching means for switching a target that receives the drive signal, between the first transducer and the second transducer;
    an amplifying means for amplifying a received signal received by the first transducer or the second transducer and outputting an amplified signal;
    a zero cross specifying means for comparing a voltage of the amplified signal with a reference voltage and specifying a zero cross point at which the voltage of the amplified signal changes from a positive voltage to a negative voltage for the first time after the voltage of the amplified signal exceeds the reference voltage;
    a timing means for measuring an elapsed time from the transmission of the drive signal to the zero cross point;
    a peak detecting means for detecting a plurality of peak voltages of the amplified signal;
    a reference determining means for determining, as a flow rate measurement reference voltage, a voltage between two adjacent peak voltages among the plurality of peak voltages;
    a calculating means for calculating a flow velocity and a flow rate of a fluid flowing through the fluid pipe, based on the elapsed time when the flow rate measurement reference voltage is set as the reference voltage; and

a necessity determining means for determining based on the voltage of the amplified signal whether or not redetermining the flow rate measurement reference voltage by the reference determining means is necessary.

2. The flow rate measuring device according to claim 1, wherein:

a voltage lower than the flow rate measurement reference voltage between the two adjacent peak voltages is set as a first voltage;
a voltage higher than the flow rate measurement reference voltage between the two adjacent peak voltages is set as a second voltage;
the peak detecting means changes the reference voltage in predetermined steps between the first voltage and the second voltage; and
when there is a voltage of the amplified signal at which the elapsed time obtained by the timing means in each of the predetermined steps changes at a predetermined change rate or more, the necessity determining means determines that the redetermining is necessary.

3. The flow rate measuring device according to claim 1, wherein:

a voltage between the two adjacent peak voltages is set as a first voltage;
a voltage higher than a higher one of the two adjacent peak voltages is set as a second voltage;
the peak detecting means changes the reference voltage in predetermined steps between the first voltage and the second voltage; and
when there is no voltage of the amplified signal at which the elapsed time obtained by the timing means in each of the predetermined steps changes at a predetermined change rate or more, the necessity determining means determines that the redetermining is necessary.

4. The flow rate measuring device according to claim 1, wherein immediately after the flow rate measurement reference voltage is redetermined by the reference determining means, the necessity determining means further determines whether or not redetermining the flow rate measurement reference voltage is necessary.

5. The flow rate measuring device according to claim 1, wherein immediately after the flow rate measuring device is turned on, the necessity determining means determines whether or not redetermining the flow rate measurement reference voltage is necessary.

6. The flow rate measuring device according to claim 1, wherein when the necessity determining means determines that the redetermining is necessary, the reference determining means redetermines the flow rate measurement reference voltage a plurality of times at predetermined time intervals and repeatedly redetermines the flow rate measurement reference voltage until a variation among the flow rate measurement reference voltages redetermined falls within a threshold.

7. The flow rate measuring device according to claim 2 or 3, wherein the peak detecting means changes the first voltage and the second voltage based on the detected peak voltages.

TRANSMISSION COMMAND

ELAPSED TIME FROM TRANSMISSION
TO ZERO CROSS POINT

NECESSITY
DETERMINING MEANS

100

NECESSITY OF REDETERMINATION
OF FLOW RATE MEASUREMENT
REFERENCE VOLTAGE

9    REFERENCE VOLTAGE

ELAPSED TIME FROM TRANSMISSION
TO ZERO CROSS POINT

TRANSMISSION COMMAND

PEAK DETECTING
MEANS

10    REFERENCE VOLTAGE

PEAK VOLTAGES OF
AMPLIFIED SIGNAL

REFERENCE
DETERMINING MEANS

11

FLOW RATE MEASUREMENT
REFERENCE VOLTAGE

ELAPSED TIME FROM TRANSMISSION
TO ZERO CROSS POINT

8

4

TRANSMITTING
MEANS

TRANSMISSION COMMAND

CALCULATING
MEANS

TIMING
MEANS

12    REFERENCE VOLTAGE

BURST WAVE

ZERO CROSS
POINT

5

SWITCHING
MEANS

RECEIVED SIGNAL

AMPLIFYING
MEANS

AMPLIFIED SIGNAL

ZERO CROSS
SPECIFYING MEANS

6

7

2

1

Φ

3

**FIG. 1**

BURST WAVE

FIRST ULTRASONIC TRANSDUCER
(OR SECOND ULTRASONIC TRANSDUCER)

p3 p4 p5

p2

REFERENCE VOLTAGE

AMPLIFIED SIGNAL

p1

SECOND ULTRASONIC TRANSDUCER
(OR FIRST ULTRASONIC TRANSDUCER)

ZERO VOLTAGE

ZERO CROSS POINT Pz

ELAPSED TIME Tp

**FIG. 2**

REDETERMINING FLOW RATE MEASUREMENT
REFERENCE VOLTAGE IS UNNECESSARY

AMPLIFIED SIGNAL

p5

p4

p3

FLOW RATE MEASUREMENT REFERENCE VOLTAGE Vref

END VOLTAGE

START VOLTAGE

p2

p1

ZERO VOLTAGE

ZERO CROSS POINT Pz (Pz3)

**FIG. 3A**

REDETERMINING FLOW RATE MEASUREMENT
REFERENCE VOLTAGE IS NECESSARY

AMPLIFIED SIGNAL

p5

p4

p3

FLOW RATE MEASUREMENT REFERENCE VOLTAGE Vref

END VOLTAGE

START VOLTAGE

p2

p1

ZERO VOLTAGE

ZERO CROSS POINT Pz (Pz3)    ZERO CROSS POINT Pz (Pz4)

**FIG. 3B**

REDETERMINING FLOW RATE MEASUREMENT
REFERENCE VOLTAGE IS UNNECESSARY

AMPLIFIED SIGNAL

p5

p4

PREVIOUS PEAK VOLTAGE

END VOLTAGE

p3

START VOLTAGE

p2

ZERO VOLTAGE

p1

ZERO CROSS POINT Pz (Pz3)    ZERO CROSS POINT Pz (Pz4)

**FIG. 4A**

REDETERMINING FLOW RATE MEASUREMENT
REFERENCE VOLTAGE IS NECESSARY

AMPLIFIED SIGNAL

p5

p4

PREVIOUS PEAK VOLTAGE

END VOLTAGE

START VOLTAGE

p3

p2

ZERO VOLTAGE

p1

ZERO CROSS POINT Pz (Pz4)

**FIG. 4B**

$$\boxed{\text{START}}$$

TRANSMIT
ULTRASONIC WAVE $\quad$ S 1

MEASURE ELAPSED TIME FROM TRANSMISSION
OF BURST WAVE TO ZERO CROSS POINT $\quad$ S 2

CALCULATE FLOW VELOCITY
AND FLOW RATE $\quad$ S 3

No $\qquad$ HAS
A PREDETERMINED PERIOD OF TIME
ELAPSED? $\quad$ S 4

Yes

SET START VOLTAGE AND END VOLTAGE TO
PREDETERMINED VALUES AND CHANGE
REFERENCE VOLTAGE IN PREDETERMINED STEPS $\quad$ S 5

MEASURE ELAPSED TIME FROM TRANSMISSION OF
BURST WAVE TO ZERO CROSS POINT,
WHICH CORRESPONDS TO THIS REFERENCE VOLTAGE $\quad$ S 6

No $\qquad$ REFERENCE VOLTAGE = END VOLTAGE? $\quad$ S 7

Yes

No $\qquad$ IS
REDETERMINING MEASUREMENT REFERENCE VOLTAGE
NECESSARY? $\quad$ S 8

Yes

SET START VOLTAGE AND END VOLTAGE TO PREDETERMINED
VALUES DIFFERENT FROM ABOVE AND CHANGE
REFERENCE VOLTAGE IN PREDETERMINED STEPS $\quad$ S 9

MEASURE ELAPSED TIME FROM TRANSMISSION OF
BURST WAVE TO ZERO CROSS POINT, WHICH
CORRESPONDS TO THIS REFERENCE VOLTAGE $\quad$ S 10

No $\qquad$ REFERENCE VOLTAGE = END VOLTAGE? $\quad$ S 11

Yes

REDETERMINE (UPDATE) MEASUREMENT REFERENCE
VOLTAGE BASED ON PEAK VOLTAGES $\quad$ S 12

FIG. 5

FIG. 6

## INTERNATIONAL SEARCH REPORT

| | International application No. |
|---|---|
| | **PCT/JP2024/029606** |

**A.    CLASSIFICATION OF SUBJECT MATTER**

*G01F 1/66*(2022.01)i
FI:    G01F1/66 101

According to International Patent Classification (IPC) or to both national classification and IPC

**B.    FIELDS SEARCHED**

Minimum documentation searched (classification system followed by classification symbols)

G01F1/66-1/667

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | JP 2014-006170 A (PANASONIC CORPORATION) 16 January 2014 (2014-01-16) paragraphs [0034]-[0072], fig. 1-7 | 1, 4-6 |
| A | | 2-3, 7 |
| A | JP 2014-224684 A (PANASONIC CORPORATION) 04 December 2014 (2014-12-04) entire text, all drawings | 1-7 |
| A | JP 2005-257359 A (MATSUSHITA ELECTRIC INDUSTRIAL CO., LTD.) 22 September 2005 (2005-09-22) entire text, all drawings | 1-7 |
| A | JP 2004-125769 A (MATSUSHIITA ELECTRIC INDUSTRIAL CO., LTD.) 22 April 2004 (2004-04-22) entire text, all drawings | 1-7 |
| A | JP 2004-069525 A (MATSUSHITA ELECTRIC INDUSTRIAL CO., LTD.) 04 March 2004 (2004-03-04) entire text, all drawings | 1-7 |

☑ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **21 October 2024** | **29 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**

International application No.

**PCT/JP2024/029606**

C. DOCUMENTS CONSIDERED TO BE RELEVANT

| Category* | Citation of document, with indication, where appropriate, of the relevant passages | Relevant to claim No. |
|---|---|---|
| A | JP 2017-181154 A (PANASONIC INTELLECTUAL PROPERTY MANAGEMENT CO., LTD.) 05 October 2017 (2017-10-05) entire text, all drawings | 1-7 |
| A | JP 2011-145289 A (PANASONIC CORPORATION) 28 July 2011 (2011-07-28) entire text, all drawings | 1-7 |

Form PCT/ISA/210 (second sheet) (July 2022)

## INTERNATIONAL SEARCH REPORT
### Information on patent family members

International application No.

**PCT/JP2024/029606**

| Patent document cited in search report | | | Publication date (day/month/year) | Patent family member(s) | | | Publication date (day/month/year) |
|---|---|---|---|---|---|---|---|
| JP | 2014-006170 | A | 16 January 2014 | US | 2015/0338255 | A1 | |
| | | | | paragraphs [0050]-[0095], fig. 1-7 | | | |
| | | | | WO | 2014/002499 | A1 | |
| | | | | EP | 2866004 | A1 | |
| | | | | CN | 104428637 | A | |
| JP | 2014-224684 | A | 04 December 2014 | (Family: none) | | | |
| JP | 2005-257359 | A | 22 September 2005 | (Family: none) | | | |
| JP | 2004-125769 | A | 22 April 2004 | US | 2004/0020307 | A1 | |
| | | | | entire text, all drawings | | | |
| | | | | KR | 10-2004-0014154 | A | |
| | | | | CN | 1474164 | A | |
| | | | | TW | 200402527 | A | |
| JP | 2004-069525 | A | 04 March 2004 | (Family: none) | | | |
| JP | 2017-181154 | A | 05 October 2017 | US | 2019/0078918 | A1 | |
| | | | | entire text, all drawings | | | |
| | | | | WO | 2017/168480 | A1 | |
| | | | | EP | 3438621 | A1 | |
| | | | | CN | 109073430 | A | |
| JP | 2011-145289 | A | 28 July 2011 | US | 2012/0255368 | A1 | |
| | | | | entire text, all drawings | | | |
| | | | | WO | 2011/074248 | A1 | |
| | | | | EP | 2515089 | A1 | |
| | | | | CN | 102667418 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014006170 A